# EUROPÄISCHE PATENTSCHRIFT

(11) **EP 1 601 568 B1**
(45) Veröffentlichungstag und Bekanntmachung des Hinweises auf die Patenterteilung: **16.01.2008**
(21) Anmeldenummer: 04711301.4
(22) Anmeldetag: 14.02.2004
(51) Int. Cl.: B62D 35/00

(54) **KRAFTFAHRZEUG MIT ZUMINDEST EINER LUFTLEITEINRICHTUNG**
MOTOR VEHICLE COMPRISING AT LEAST ONE AERODYNAMIC SPOILER
VEHICULE AUTOMOBILE COMPRENANT AU MOINS UN DISPOSITIF DEFLECTEUR D'AIR

(30) Priorität: 03.03.2003 DE 10309369
(43) Veröffentlichungstag der Anmeldung: 07.12.2005
(73) Patentinhaber: Wilhelm Karmann GmbH, 49084 Osnabrück (DE)
(72) Erfinder: GRAVE, Markus, 49536 Lienen (DE); WEGERT, Friedrich, 49086 Osnabrück (DE)
(86) Internationale Anmeldenummer: PCT/DE2004/000278
(87) Internationale Veröffentlichungsnummer: WO 2004/078564

(56) Entgegenhaltungen:
- EP-A- 0 153 743
- DE-A- 4 207 658

## Beschreibung

Die Erfindung betrifft ein Kraftfahrzeug mit zumindest einer beweglichen Luftleiteinrichtung, die eine Luftleitfläche umfaßt.

Aus der DE 43 05 090 A1 ist ein Fahrzeug bekannt, bei dem die ausfahrbare Luftleitfläche, die häufig auch als Spoilerblatt bezeichnet wird, über einen schwenkbaren Ausstellhebel gehalten ist, der seinerseits über eine in Fahrzeuglängsrichtung gleitfähige und um eine quer im Fahrzeug liegende Achse schwenkbeweglich ist. Der Ausstellhebel enthält eine Kulisse, in der ein formangepaßter Gleiter durch Ein- und Ausfahren eines Hydraulikantriebs beweglich ist und dadurch das Schwenken und Verschieben des Ausstellhebels bewirkt. In aufgestellter Stellung des Spoilerblatts lastet nicht nur dessen Eigengewicht, sondern auch der insbesondere bei höherer Geschwindigkeit auf diesen einwirkende Winddruck auf dem Ausstellhebel. Dieser muß daher, um ein ungewolltes Wiedereinschwenken und damit Absenken des Spoilerblatts zu vermeiden, vom Antrieb kraftbeaufschlagt bleiben. Dadurch muß der Antrieb relativ groß ausgelegt werden. Dies schränkt den zur Verfügung stehenden Raum, bei einem Heckspoiler häufig Kofferraum, ein. Zudem muß der Antrieb selbst ein hohes Gewicht haben.

Die DE 42 07 658 A1 zeigt eine dort mit 2 bezeichnete Schwinge zur Bewegung und Unterstützung des Spoilers, die in dessen ausgefahrener Spoilerstellung (Wirkposition) ziemlich genau vertikal steht und somit dem Druck auf den Spoiler recht gut entgegenwirkt und den Antrieb zumindest teilweise entlastet. Ein die Bewegung der Schwinge bewirkender Kurbeltrieb befindet sich dabei ebenfalls nahezu in Strecklage, so daß die am Luftleitprofil auftretenden hohen aerodynamischen Kräfte durch relativ geringe Antriebsmomente an den Antrieben abgestützt werden können. Gemäß dieser Schrift ist ein erster, über drei Hebel auf den Spoiler wirkender Antrieb vorgesehen, der beim Ausfahren für dessen Aufwärts- und Heckwärtsverlagerung sorgt. Die in etwa horizontale und bei der Bewegung parallel verbleibende Ausrichtung des Spoilers wird jedoch erst durch ein zweites Gestänge mit einer weiteren Lenkerkette erreicht, die an einem weiteren Drehpunkt des Spoilers angreifen und diesen relativ zum ersten Drehpunkt so verlagern, daß die Ausrichtung des Spoilers in seiner Bewegung erhalten bleibt. Eine derartige Mechanik mit zwei Gelenkketten, die über mehrere karosseriefeste Drehpunkte zu bewegen sind, ist jedoch aufwendig und erfordert insbesondere einen zweiten Antrieb M2 sowie eine erhebliche Erstreckung nach unten, die zu einer Einschränkung des in der Regel darunter befindlichen Kofferraums führt.

Der Erfindung liegt das Problem zugrunde, bei einem Kraftfahrzeug mit einer beweglichen Luftleiteinrichtung die ausgefahrene Stellung einer zugehörigen Luftleitfläche mit konstruktiv einfachen Mitteln zu sichern.

Die Erfindung löst dieses Problem durch ein Kraftfahrzeug mit den Merkmalen des Anspruchs 1. Hinsichtlich vorteilhafter Ausgestaltungen der Erfindung wird auf die weiteren Ansprüche 2 bis 7 verwiesen.

In der erfindungsgemäßen Ausbildung nach Anspruch 1 ist einerseits ein Parallelogramm vorgesehen. Die Anzahl der Bauteile ist verringert, somit auch das Gewicht und der konstruktive Aufwand.

Ein Raumbedarf ist minimiert.

Die Über-Totpunkt-Lage eines aufstellenden Schwenkhebels in ausgefahrener Spoilerstellung stellt sicher, daß ein Druck auf die ausgefahrene Luftleitfläche nicht zu einem Einknicken der Aufstellmechanik führen, sondern diese durch ihre Über-Totpunkt-Lage in der ausgefahrenen Stellung gehalten werden kann. Diese maximal ausgefahrene Stellung stellt somit für die Aufstellmechanik ohne irgendwelche weiteren Maßnahmen ein stabiles Gleichgewicht dar. Ein Druck auf die Luftleitfläche wirkt dabei in Richtung des Gleichgewichts.

Besonders vorteilhaft ist die Aufstellmechanik durch einen Anschlag abgestützt, woraus eine Entlastung der Antriebswelle resultiert. Dieser Anschlag ist so angeordnet, daß er bei Druckbeaufschlagung der Luftleitfläche ein Rückschwenken der Aufstellmechanik im Sinne eines Einfahrens der Luftleitfläche hemmt. Daher kann die Antriebswelle in maximal ausgefahrener Stellung der Luftleitfläche in eine Leerlaufstellung überführt werden und muß nicht mehr die Funktion der Endlagensicherung übernehmen. Der Schwenkantrieb kann dadurch verkleinert werden.

Die geforderte Stabilitätssteigerung ist besonders einfach über einen Kurbeltrieb zu realisieren, bei dem das die Kurbel mit einem Kopplungsglied verbindende Gelenk nach Überschreiten eines Totopunkts an einer Stützaufnahme aufliegen kann. Das Gelenk kann eine nach außen ausgewölbte Form aufweisen und in einer entsprechend konkaven Stützaufnahme sicheren Halt finden.

Besonders günstig ist es, wenn die Teile der Aufstellmechanik frei von jeglichen translatorischen Freiheitsgraden allein durch Schwenkbewegungen zu verlagern sind. Dies erleichtert sowohl die Konstruktion als auch die Zuverlässigkeit der Aufstellmechanik. Der Raumbedarf und die Anzahl der Bauteile für diese sind dann ebenfalls minimiert.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: eine perspektivische, im vorderen Bereich abgebrochene Heckansicht eines erfindungsgemäßen Kraftfahrzeugs mit eingefahrener Luftleitfläche,
- Fig. 2: eine ähnliche Ansicht wie Figur 1 mit ausgefahrener Luftleitfläche,
- Fig. 3: eine Detailansicht einer der linken Fahrzeuglängsseite zugeordneten Aufstellmechanik in Stellung nach Fig. 1, etwa entsprechend dem Detailausschnitt III in Fig. 1, jedoch ohne montierte Luftleitfläche,
- Fig. 4: eine Detailansicht einer der linken Fahrzeuglängsseite zugeordneten Aufstellmechanik in Stellung nach Fig. 2, etwa entsprechend dem Detailausschnitt IV in Fig. 2, jedoch ohne montierte Luftleitfläche,
- Fig. 5: eine Ansicht aus Richtung des Pfeils V in Fig. 4 auf die ausgeschwenkte Aufstellmechanik,
- Fig. 6: eine Ansicht aus Richtung des Pfeils VI in Fig. 4 auf die Luftleiteinrichtung mit ausgeschwenkter Aufstellmechanik,

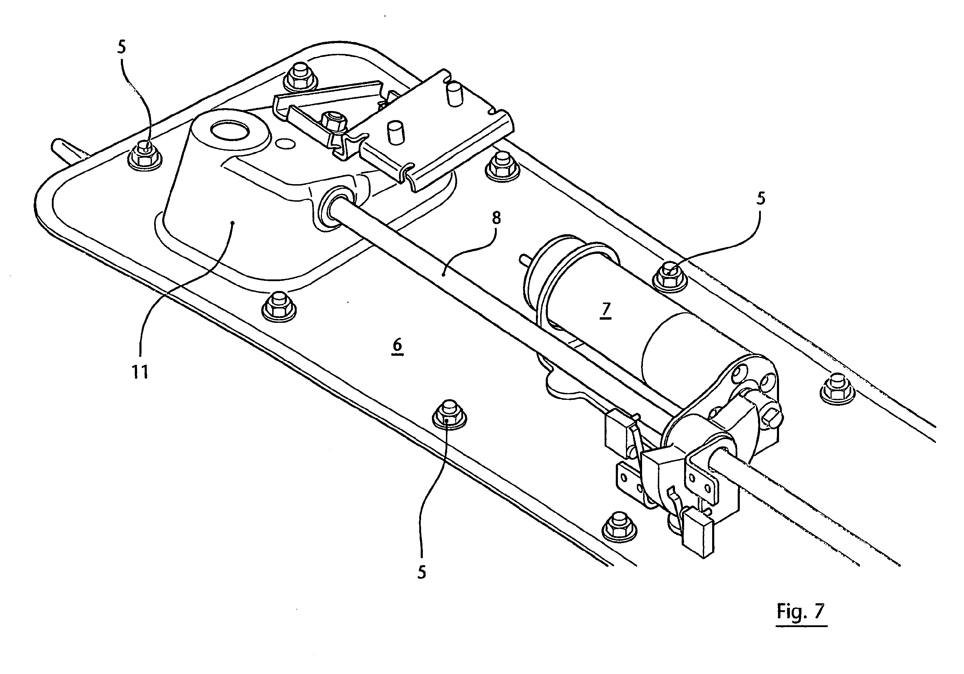

- Fig. 7: eine perspektivische Ansicht einer Tragplatte zur Halterung des die Aufstellmechanik bewegenden Antriebs und der kraftübermittelnden Teile von unten.

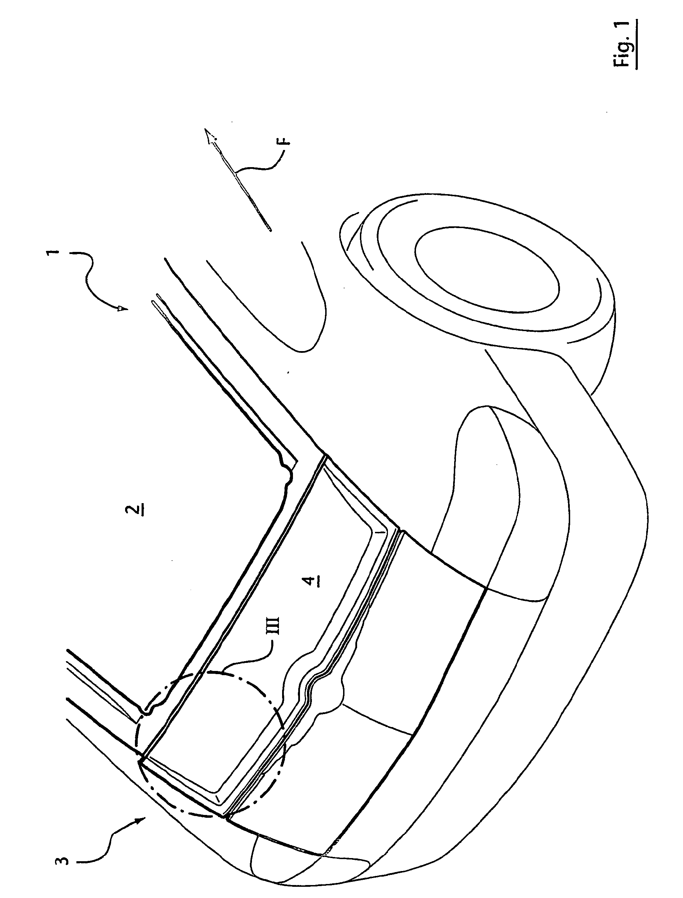

Das in Figur 1 dargestellte Kraftfahrzeug 1 weist in seinem Heckbereich unterhalb einer Heckscheibe 2 eine Luftleiteinrichtung 3 auf, die eine bewegliche Luftleitfläche 4, oft auch als Spoiler oder Spoilerblatt bezeichnet, umfaßt.

Zusätzlich oder alternativ ist die Anordnung eines erfindungsgemäßen Spoilers auch an anderen Stellen des Fahrzeugs 1, zum Beispiel oberhalb der Heckscheibe 2 oder im Frontbereich, möglich. Das Fahrzeug kann sowohl ein geschlossenes als auch ein Targa- oder Cabrioletfahrzeug sein.

Die Luftleiteinrichtung 3 ist insgesamt als Modul ausgebildet und umfaßt eine in einen Ausschnitt der Karosserie - etwa über Schrauben 5 - einsetzbare Tragplatte 6, an der alle beweglichen Teile der Luftleiteinrichtung 3 abgestützt sind. Auf der Tragplatte 6 ist zumindest ein Antrieb 7, etwa ein Hydraulik- oder Elektroantrieb, angeordnet, der auf eine rotierbare Welle 8 einwirken kann, die sich quer zum Fahrzeug 1 erstreckt und eine Aufstellmechanik 9 für die Luftleitfläche 4 betätigt.

Je nach Breite der Luftleitfläche 4 kann die Aufstellmechanik 9 über die Fahrzeugbreite ein oder mehrere bewegliche Gelenkanordnungen 10 enthalten, die die Luftleitfläche 4 tragen und bewegen. Im Ausführungsbeispiel sind symmetrisch zu einer vertikalen Fahrzeuglängsmittelebene als Bewegungseinheiten zwei gleichartige Gelenkanordnungen 10 vorgesehen.

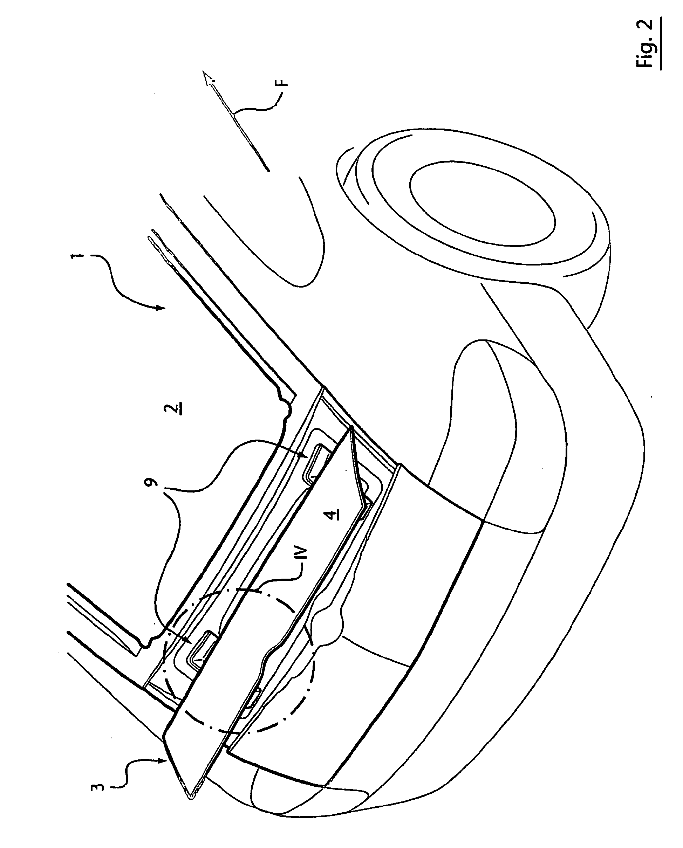

Über diese ist die Luftleitfläche zwischen der in Fig. 1 gezeigten Ruheposition, in der die Luftleitfläche 4 bündig in der Karosserieaußenhaut gelegen ist, und der in Fig. 2 gezeigten aufgestellten Position, in der das Spoilerblatt 4 heckwärts verlagert und nach hinten ansteigend gehalten ist, verlagerbar.

Die Betätigung dieser Verlagerung kann automatisch, etwa bei Erreichen einer Grenzgeschwindigkeit, und zusätzlich oder alternativ vom Armaturenbrett aus fernsteuerbar sein. Zwischenstellungen zwischen einer maximal ausgefahrenen und einer vollständig eingefahrenen Stellung sind grundsätzlich möglich.

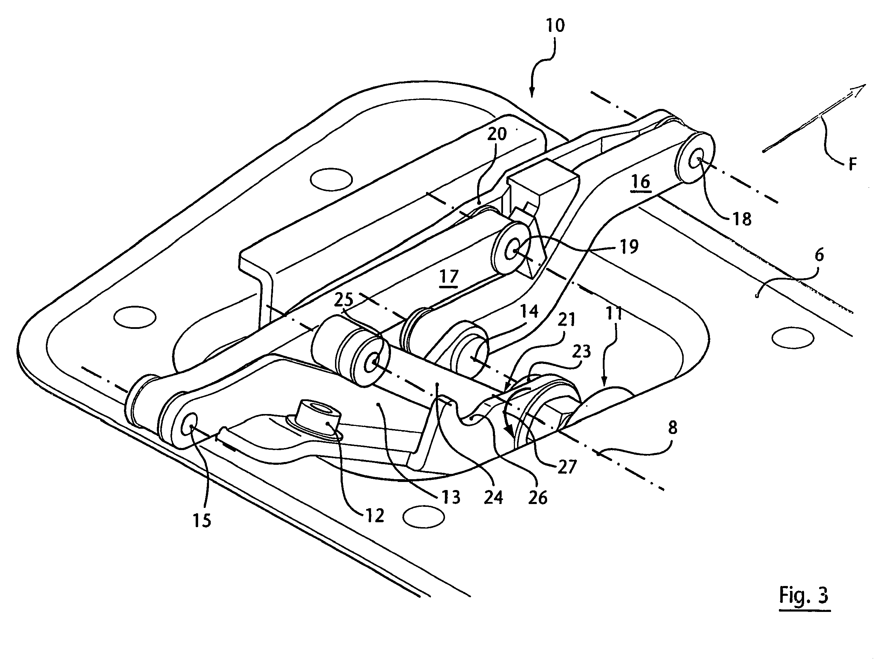

In Fig. 3 ist eine der beiden seitlichen Gelenkanordnungen 10 in Ruheposition detailliert dargestellt. Die Gelenkanordnung 10 ist dabei selbst vormontierbar und als ganzes in einer wannenartigen Ausnehmung 11 der Tragplatte 6 abgestützt, etwa über Schrauben 12. Die Antriebswelle 8 durchgreift eine Wandung der Ausnehmung 11, um auf die Gelenkanordnung 10 einwirken zu können. Die umfaßt einen in Fahrzeuglängsrichtung liegenden und am Grund der Ausnehmung 11 fest montierten Träger 13, der über ein In Fahrtrichtung F vorderes Gelenk 14 und ein hinteres Gelenk 15 zwei Schwenklenker 16, 17 schwenkbeweglich abstützt. Beide Gelenke 14, 15 sind drehfest gegenüber der Karosserie, lassen also außer dem Rotationsfreiheitsgrad keine weitere Bewegungsmöglichkeit für die Schwenklenker 16, 17 zu, so daß die Gelenkanordnungen 10 insgesamt in ihrem Aufbau einfach gehalten sind. Die Schwenklenker 16, 17 münden mit ihren den Gelenken 14, 15 abgewandten Enden in zwei weiteren Gelenken 18, 19 eines oberen Trägers 20, der seinerseits mittelbar oder unmittelbar das Spoilerblatt 4 untergreift und abstützt. Die an den Gelenken 14, 15, 18, 19 verbundenen Träger und Lenker 13, 20, 16, 17 bilden somit insgesamt ein Viergelenk aus, was nicht zwingend ist, jedoch eine einfache und zuverlässige Bewegungseinheit bildet. Das Viergelenk ist als Gelenkparallelogramm ausgebildet.

Um die Gelenkanordnungen 10 zu öffnen oder zu schließen - und damit das Spoilerblatt 4 aus- oder einzufahren -, ist ein weiterer Schwenklenker 21 vorgesehen, der auf der Antriebswelle 8 gehalten ist und sich von dort zu dem hinteren Schwenklenker 17 erstreckt. Dieser zusätzliche Schwenklenker 21 übernimmt die Vermittlung der Antriebskraft. Er ist in sich an einem Gelenk 22 geteilt in einen von der Antriebswelle 8 bis zu dem Gelenk 22 erstreckten Kurbelteil 23 und einen von dort zum Schwenklenker 17 erstreckten Kopplungsteil 24. Dieser greift in einem weiteren Gelenk 25 an dem Schwenklenker 17 an. Da auch der geteilte Schwenklenker 21 lediglich in Rotationsfreiheitsgraden beweglich ist, umfaßt somit die gesamte Aufstellmechanik 9 lediglich gegeneinander schwenkende Teile. Es ist keinerlei Translationsbewegung erforderlich.

Weiterhin umfaßt die Gelenkanordnung 10 einen karosseriefesten Anschlag 26, der hier als Stützaufnahme für das konvexe Gelenk 22 dient und als konkave Mulde ausgebildet ist.

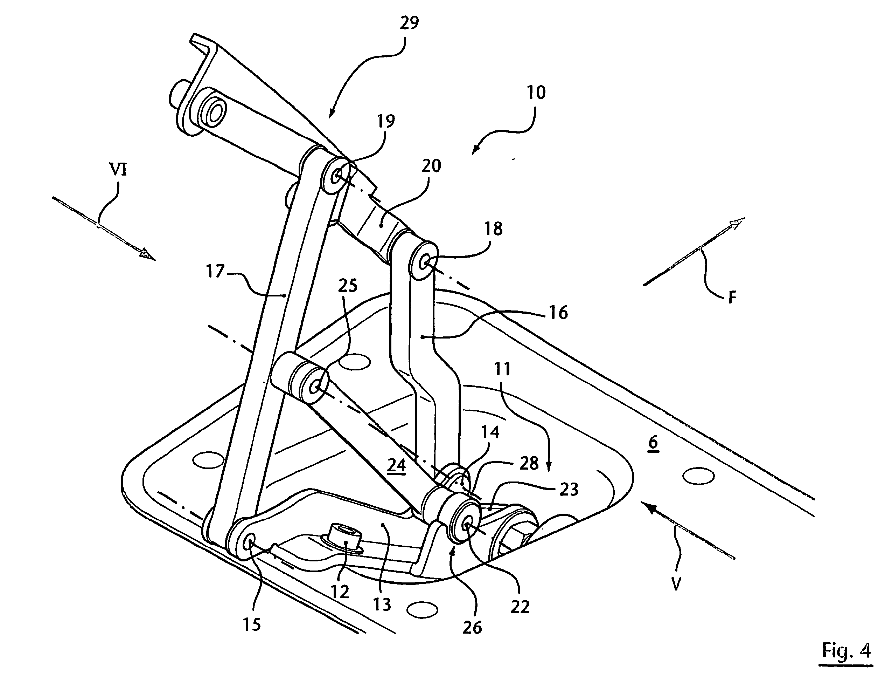

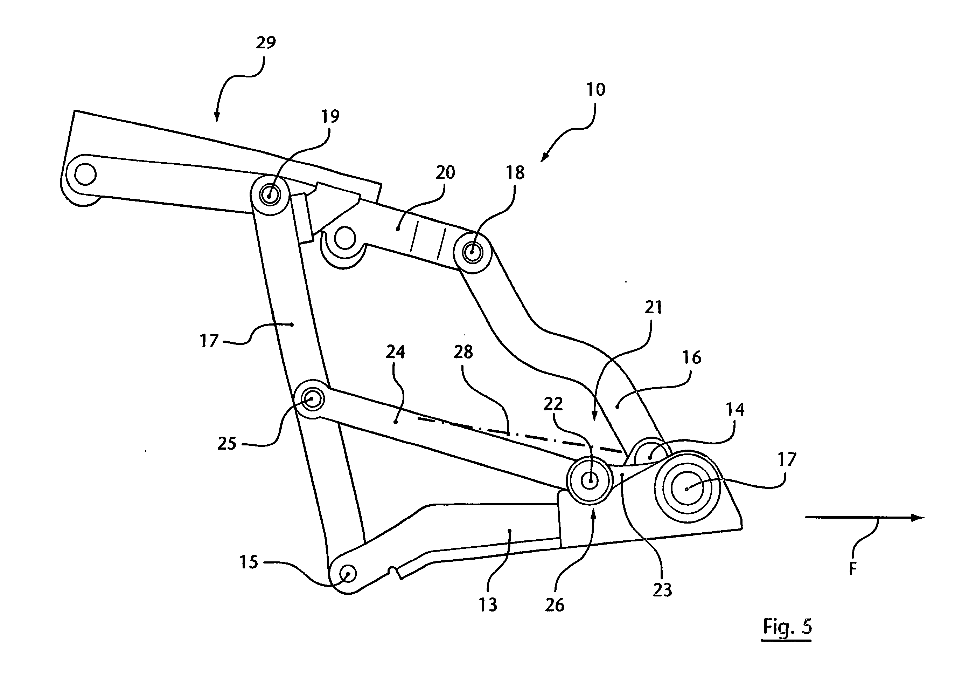

Um das Spoilerblatt 4 aus der Ruheposition in die maximal aufgestellte Position zu überführen (Übergang von Fig. 1 zu Fig. 2 sowie von Fig. 3 zu Fig. 4), wird die Antriebswelle 8 in Richtung des Pfeils 27 rotiert. Der Kurbelteil 23 wird entsprechend mitbewegt und öffnet das Gelenk 22, so daß der Kopplungsteil 24 im wesentlichen entgegen der Fahrtrichtung F und leicht aufwärts verlagert wird. Durch sein Angreifen am Schwenklenker 17 öffnet er dabei das als Gelenkparallelogramm ausgebildete Viergelenk 13,16,17,20. Eine weitere Wirkverbindung zwischen dem Viergelenk und der Antriebswelle 8 außer dem Schwenklenker 21 ist nicht erforderlich. Kurz vor Erreichen der Endstellung nach Fig. 4 erreichen Kurbel- und Kopplungsteil 23, 24 eine gestreckte Totpunktlage zueinander (dort durch die gestrichelte Linie 28 angedeutet). Aus dieser instabilen Lage fällt daher der Schwenklenker 21 in die in Fig. 4 und 5 gezeigte Endstellung, in der das Gelenk 22 in der Stützaufnahme 26 gehalten ist. Anstelle dieses als Stützaufnahme wirkenden karosseriefesten Anschlags 26 wäre auch eine Sicherung der Teile 23, 24 aneinander durch entsprechende diesen Teilen zugeordnete Anschläge möglich.

Bei einem in Richtung des Pfeils 29 wirkenden Druck auf das Spoilerblatt 4 wird die Aufstellmechanik nun nicht mehr im Einfahrsinn kraftbeaufschlagt, sondern derart, daß das Gelenk 22 in Richtung des als Stützaufnahme wirkenden Anschlags 26 gedrückt wird. Die maximal ausgefahrene Stellung erhält einerseits dadurch und zum anderen dadurch, daß eine Einfahrbewegung zunächst ein kraftaufwendiges Überschreiten der Totpunktlage erfordern würde, eine doppelte Endlagensicherung.

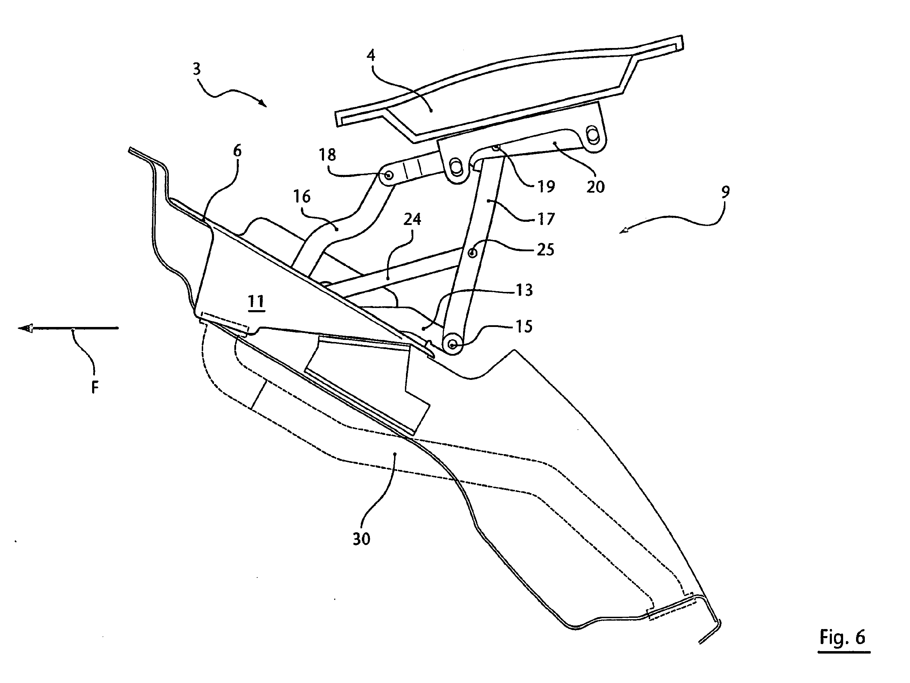

Wie in Fig. 6 zu erkennen ist, umfaßt die Luftleiteinrichtung 3, um ihren modularen Einbau in die Karosserie zu ermöglichen und insofern die Montage zu vereinfachen, einen zusätzlichen Wasserablauf 30, wodurch zusätzliche Montageschritte hierfür entbehrlich sind.

## Patentansprüche

1. Kraftfahrzeug (1) mit zumindest einer mittels eines Antriebs (7) ausfahrbaren Luftleiteinrichtung (3) mit einer Luftleitfläche (4), die über eine bewegliche, mehrere Schwenklenker (16;17;21) umfassende Aufstellmechanik (9) halterbar ist, wobei zumindest ein Schwenklenker (21) in sich geteilt ist und bei Erreichen der maximal aufgestellten Stellung der Luftleitfläche (4) sich in einer Über-Totpunkt-Stellung befindet und die Aufstellmechanik (9) ein Gelenkparallelogramm (13;16;17;20) umfasst.

2. Kraftfahrzeug (1) nach Anspruch 1,
**dadurch gekennzeichnet,**
**daß** in maximal ausgefahrener Stellung der Luftleitfläche (4) zumindest ein Schwenklenker (21) der Aufstellmechanik (9) mittels zumindest eines Anschlags (26) abgestützt ist.

3. Kraftfahrzeug nach Anspruch 2,
**dadurch gekennzeichnet,**
**daß** der geteilte Schwenklenker (21) gelenkig geteilt ist in einen von einer Antriebsschwenkachse (8) unmittelbar schwenkbaren Kurbelteil (23) und einen äußeren, der Luftleitfläche (4) zugewandten Kopplungsteil (24), wobei das den Kurbelteil (23) und den Kopplungsteil (24) verbindende Gelenk (22) an einer durch den Anschlag (26) gebildeten Stützauflage abstützbar ist.

4. Kraftfahrzeug nach einem der Ansprüche 1 bis 3,
**dadurch gekennzeichnet,**
**daß** der betätigende Hebel der geteilte Schwenklenker (21) ist.

5. Kraftfahrzeug nach Anspruch 4,
**dadurch gekennzeichnet,**
**daß** das Gelenkparallelogramm (13;16;17;20) außer dem
geteilten Schwenklenker (21) keine Wirkverbindung zum Antrieb (7) aufweist.

6. Kraftfahrzeug nach einem der Ansprüche 1 bis 5,
**dadurch gekennzeichnet,**
**daß** die Aufstellmechanik (9) allein in rotatorischen Freiheitsgraden beweglich ist.

7. Kraftfahrzeug nach einem der Ansprüche 1 bis 6,
**dadurch gekennzeichnet,**
**daß** die Aufstellmechanik (9) über den Fahrzeugquerverlauf zwei gleichartige Bewegungseinheiten (10) umfaßt.

## Claims

1. A motor vehicle (1) with at least one air deflection device (3), which is able to be extended using a drive mechanism (7), with an air deflection surface (4) which is able to be mounted via a movable situating mechanism (9) which includes several pivot guides (16;17;21), whereby at least one pivot guide (21) is divided and, when the maximally situated position of the air deflection surface (4) is achieved, is located in an over-dead-centre position, and the situating mechanism (9) includes an articulation parallelogram (13;16;17;20).

2. The motor vehicle (1) according to Claim 1,
**characterised in that**
in the maximally extended position of the air deflection surface (4), at least one pivot guide (21) of the situating mechanism (9) is supported by at least one stopper (26).

3. The motor vehicle according to Claim 2,
**characterised in that**
the divided pivot guide (21) is divided in an articulated manner into a crank part (23), which is directly pivotable from a drive pivot axis (8), and an outer coupling part (24) facing the air deflection surface (4), whereby the articulation (22) connecting the crank part (23) and the coupling part (24) is able to be supported at a supporting rest formed by the stopper (26).

4. The motor vehicle according to one of claims 1 to 3,
**characterised in that**
the actuating lever is the divided pivot guide (21).

5. The motor vehicle according to Claim 4,
**characterised in that**
the articulation parallelogram (13:16;17;20) has, with the exception of the divided pivot guide (21), no active connection to the drive mechanism (7).

6. The motor vehicle according to one of claims 1 to 5,
**characterised in that**
the situating mechanism (9) is movable solely in rotatory degrees of freedom.

7. The motor vehicle according to one of claims 1 to 6,
**characterised in that**
the situating mechanism (9) includes two uniform movement units (10) over the transverse course of the vehicle.

## Revendications

1. Véhicule automobile (1) comprenant au moins un dispositif déflecteur d'air (3) pouvant être déployé au moyen d'un entraînement (7), avec une surface de déflection d'air (4) qui peut être retenue par le biais d'un mécanisme de redressement mobile (9) comprenant plusieurs bras pivotants (16 ; 17 ; 21), au moins un bras pivotant (21) étant divisé en soi et une fois atteinte la position redressée au maximum de la surface de déflection d'air (4), se trouvant dans une position de point mort haut et le mécanisme de redressement (9) comprend un parallélogramme articulé (13 ; 16 ; 17 ; 20).

2. Véhicule automobile (1) selon la revendication 1,
**caractérisé en ce que**
dans la position redressée au maximum de la surface de déflection d'air (4), au moins un bras pivotant (21) du mécanisme de redressement (9) est supporté au moyen d'au moins une butée (26).

3. Véhicule automobile selon la revendication 2,
**caractérisé en ce que**
le bras pivotant (21) divisé est divisé de manière articulée en une partie de manivelle (23) pouvant pivoter directement depuis un axe de pivotement d'entraînement (8) et une partie d'accouplement (24) extérieure, tournée vers la surface de déflection d'air (4), l'articulation (22) reliant la partie de manivelle (23) et la partie d'accouplement (24) pouvant s'appuyer sur un appui de support formé par la butée (26).

4. Véhicule automobile selon l'une quelconque des revendications 1 à 3,
**caractérisé en ce que**
le levier d'actionnement est le bras pivotant divisé (21).

5. Véhicule automobile selon la revendication 4,
**caractérisé en ce que**
le parallélogramme articulé (13 ; 16 ; 17 ; 20) ne présente aucune connexion active avec l'entraînement (7) en plus du bras pivotant divisé (21).

6. Véhicule automobile selon l'une quelconque des revendications 1 à 5,
**caractérisé en ce que**
le mécanisme de redressement (9) peut se déplacer seulement dans des degrés de liberté rotatifs.

7. Véhicule automobile selon l'une quelconque des revendications 1 à 6,
**caractérisé en ce que**
le mécanisme de redressement (9) comprend, sur l'étendue transversale du véhicule, deux unités de déplacement du même type (10).
